# EUROPÄISCHE PATENTSCHRIFT

(11) **EP 3 472 029 B1**
(45) Veröffentlichungstag und Bekanntmachung des Hinweises auf die Patenterteilung: **27.05.2020**
(21) Anmeldenummer: 17724554.5
(22) Anmeldetag: 19.05.2017
(51) Int. Cl.: B62D 21/03, B62D 29/00

(54) **FAHRGESTELLANORDNUNG UND LANDFAHRZEUG**
CHASSIS ASSEMBLY AND LAND VEHICLE
SYSTÈME DE CHÂSSIS ET VÉHICULE TERRESTRE

(30) Priorität: 21.06.2016 DE 102016111308
(43) Veröffentlichungstag der Anmeldung: 24.04.2019
(73) Patentinhaber: Rheinmetall MAN Military Vehicles Österreich GesmbH, 1230 Wien (AT)
(72) Erfinder: HOESSL, Bernhard, 2721 Bad Fischau-Brunn (AT)
(74) Vertreter: Horn Kleimann Waitzhofer Patentanwälte PartG mbB
(86) Internationale Anmeldenummer: PCT/EP2017/062088
(87) Internationale Veröffentlichungsnummer: WO 2017/220267

(56) Entgegenhaltungen:
- AU-A- 7 958 075
- AU-A1- 2009 203 211
- GB-A- 436 438
- GB-A- 1 246 624
- US-A1- 2015 284 027

## Beschreibung

Die vorliegende Erfindung betrifft eine Fahrgestellanordnung für ein Landfahrzeug, insbesondere für einen geländegängigen Lastkraftwagen, und ein Landfahrzeug, insbesondere einen geländegängigen Lastkraftwagen, mit einer derartigen Fahrgestellanordnung.

Geländegängige Lastkraftwagen können einen biegesteifen, aber verwindungsweichen Fahrgestellrahmen und einen auf dem Fahrgestellrahmen angeordneten verwindungssteifen Aufbau aufweisen. Der Aufbau kann über einen ebenfalls biegesteifen, aber verwindungsweichen Hilfsrahmen oder Zwischenrahmen an dem Fahrgestellrahmen befestigt sein. Der Aufbau kann an einer Unterseite ein sich in einer Längsrichtung des Lastkraftwagens erstreckendes Zentralrohr aufweisen, das mit Hilfe von Traversen oder Tragarmen fest mit dem Aufbau verbunden ist und das an mehreren Punkten über Lagereinrichtungen beweglich mit dem Zwischenrahmen verbunden ist. Mit Hilfe dieser Anordnung kann bei einer Torsion oder Verwindung des Fahrgestellrahmens, beispielsweise bei einer Geländefahrt, verhindert werden, dass der verwindungssteife Aufbau beschädigt wird.

Die DE 27 16 994 C2 beschreibt ein Lastfahrzeug mit einem biegesteifen, aber verwindungsweichen Fahrgestellrahmen, der mit einem verwindungssteifen Aufbau über Dreipunktlagerungen mit mittigen und seitlichen Befestigungsstellen verbunden ist. Der Aufbau weist ein um eine horizontale Achse bewegliches Zentralrohr auf, das an seinen beiden Enden am Fahrgestellrahmen in Lagerschalen mittig gelagert ist. An seitlichen Befestigungsstellen sowohl am Fahrgestellrahmen als auch am Aufbau und zwischen diesen sind Gleitplatten horizontal befestigt, die mit Spiel von je einem unter Längsfederkraft stehenden Anker gegeneinander verspannbar sind.

Die DE 25 34 155 A1 zeigt einen Lastkraftwagen mit einem von einem Fahrgestellrahmen abgestützten kastenförmigen Fahrzeugaufbau, wobei der Fahrzeugaufbau auf einem verwindungssteifen Zwischenrahmen befestigt ist, welcher mit dem Fahrgestellrahmen an drei Punkten verbunden ist, deren einer in der Längsmittellinie des Fahrzeugs angeordnet ist und deren andere beide Punkte die Eckpunkte der Basis eines gleichschenkligen Dreiecks bilden.

Die EP 0 583 750 A2 beschreibt ein Lastfahrzeug mit einem biegesteifen, aber verwindungsweichen Fahrgestellrahmen. Auf diesem ist über einen Zwischenrahmen ein verwindungssteifer Aufbau angeordnet, der an seiner Unterseite ein sich in der Fahrzeuglängsmitte erstreckendes Zentralrohr aufweist. Dieses Zentralrohr ist an mehreren Punkten über Lager mit dem Zwischenrahmen verbunden.

Die EP 123 11 29 A2 zeigt ein Lastfahrzeug mit einem biegesteifen, aber verwindungsweichen Fahrgestellrahmen, auf dem ein verwindbarer Hilfsrahmen angeordnet ist, der einen biege- und verwindungssteifen Aufbau trägt, der an wenigstens drei Punkten über Bewegungslager mit dem Hilfsrahmen verbunden ist.

Die GB 1 246 624 A beschreibt ein Fahrgestell für einen Fahrzeuganhänger. Das Fahrgestell umfasst ein sich in einer Längsrichtung des Fahrgestells erstreckendes Zentralrohr, an dem eine Vielzahl sich senkrecht zu dem Zentralrohr erstreckender Träger angebracht ist.

Die GB 436 438 A zeigt ein auf Schienen bewegbares Fahrgestell mit einem Zentralrohr. Quer zu dem Zentralrohr verlaufen Querträger.

Die AU 79580 75 A beschreibt ein Fahrgestell für ein Fahrzeug. Das Fahrgestell umfasst Längsträger in Form von I-Trägern und senkrecht dazu positionierte Querträger.

Vor diesem Hintergrund besteht eine Aufgabe der vorliegenden Erfindung darin, eine verbesserte Fahrgestellanordnung für ein Landfahrzeug zur Verfügung zu stellen.

Demgemäß wird eine Fahrgestellanordnung für ein Landfahrzeug, insbesondere für einen geländegängigen Lastkraftwagen, vorgeschlagen. Die Fahrgestellanordnung umfasst einen Fahrgestellrahmen, einen mit dem Fahrgestellrahmen verbundenen Zwischenrahmen, der zumindest einen Profilträger umfasst, der in einer Längsrichtung der Fahrgestellanordnung verläuft, und eine Trageinrichtung zum Tragen eines Aufbaus des Landfahrzeugs, wobei die Trageinrichtung beweglich an dem Zwischenrahmen gelagert ist und einen in einer Querrichtung der Fahrgestellanordnung verlaufenden Tragarm mit einem Tragarmdurchbruch umfasst, wobei der zumindest eine Profilträger derart durch den Tragarmdurchbruch hindurchgeführt ist, dass ein Querschnitt des zumindest einen Profilträgers zumindest abschnittsweise innerhalb des Tragarmdurchbruchs angeordnet ist.

Unter einem "Landfahrzeug" ist vorliegend beispielsweise ein Lastkraftwagen, ein geschütztes Fahrzeug, eine Zugmaschine, ein Pick-up, ein Anhänger oder dergleichen zu verstehen. Das Landfahrzeug kann motorangetrieben sein oder, für den Fall, dass das Landfahrzeug ein Anhänger ist, keinen eigenen Antrieb umfassen.

Der Tragarm kann auch als Traverse bezeichnet werden. Der Zwischenrahmen kann auch als Hilfsrahmen bezeichnet werden. Vorzugsweise umfasst die Trageinrichtung eine Vielzahl derartiger Tragarme. Die Fahrgestellanordnung kann ein sogenannter Zentralrohrrahmen oder auch ein sogenannter Leiterrahmen sein. Die Trageinrichtung kann ein in der Längsrichtung verlaufendes Zentralrohr aufweisen, das mit Hilfe von Lagereinrichtungen beispielsweise in Form einer Dreipunktlagerung beweglich an dem Zwischenrahmen gelagert ist.

Der Querschnitt des zumindest einen Profilträgers ist dabei als eine Schnittfläche des zumindest einen Profilträgers senkrecht zu der Längsrichtung definiert. Der Querschnitt kann auch als Querschnittsfläche bezeichnet werden. Darunter, dass der Querschnitt des zumindest einen Profilträgers zumindest abschnittsweise innerhalb des Tragarmdurchbruchs angeordnet ist, ist insbesondere zu verstehen, dass ein erster Teil des Querschnitts innerhalb des Tragarmdurchbruchs und ein zweiter Teil des Querschnitts außerhalb des Tragarmdurchbruchs angeordnet ist. Der Querschnitt kann auch vollständig innerhalb des Tragarmdurchbruchs angeordnet sein. Der Querschnitt ist bevorzugt C-förmig.

Vorzugsweise weist der Zwischenrahmen zwei parallel zueinander und beabstandet voneinander angeordnete und in der Längsrichtung verlaufende Profilträger auf. Die Profilträger können in der Längsrichtung eine Kröpfung, das heißt, einen Knick, aufweisen. Dementsprechend weist der Tragarm auch zwei Tragarmdurchbrüche auf, wobei jedem Tragarmdurchbruch ein Profilträger zugeordnet ist. Die Profilträger sind vorzugsweise Stahlträger, insbesondere kostengünstige Strangpressprofile. Gekröpfte Längsträger werden zur Herstellung gepresst. Der Fahrgestellrahmen weist vorzugsweise ebenfalls zwei parallel zueinander und beabstandet voneinander angeordnete und in der Längsrichtung verlaufende Profilträger auf, die in einer Hochrichtung der Fahrgestellanordnung unter den Profilträgern des Zwischenrahmens angeordnet sind. Die Profilträger des Fahrgestellrahmens sind vorzugsweise ebenfalls im Querschnitt C-förmige Stahlträger, insbesondere ebenfalls kostengünstige Strangpressprofile.

Dadurch, dass der Querschnitt des zumindest einen Profilträgers zumindest abschnittsweise innerhalb des Tragarmdurchbruchs angeordnet ist, kann im Vergleich zu bekannten Anordnungen bei hoher Stabilität eine besonders niedrige Bauhöhe der Fahrgestellanordnung erreicht werden. Bei den bekannten verwindungssteifen Aufbauten mit Zwischenrahmen und Zentralrohr sind hohe Lastanforderungen, wie beispielsweise Nutzlasten von über 15 Tonnen oder darüber hinaus, für schweren Geländeeinsatz mit hohen Vertikalstößen nur mit hohem Materialeinsatz aufgrund notwendiger hoher Wandstärken möglich. Daraus resultiert ein hohes Gewicht, das letztendlich die verfügbare Nutzlast begrenzen kann. Zudem ist bei dieser bekannten Bauweise mit Tragarmen, die oberhalb der Profilträger des Zwischenrahmens angeordnet sind, die Konsequenz, dass diese Bauweise eine hohe Bauhöhe aufweist. Dadurch wird bei einer vorgegebenen Begrenzung der Gesamthöhe des Fahrzeugs die nutzbare Höhe des Aufbaus verringert. Außerdem ist die Höhe der Profilträger des Zwischenrahmens eingeschränkt, das heißt, die Torsions- und Biegesteifigkeit ist im Vergleich zu der erfindungsgemäßen Fahrgestellanordnung minimiert.

Gemäß einer Ausführungsform ist der zumindest eine Profilträger berührungsfrei durch den Tragarmdurchbruch hindurchgeführt.

Unter berührungsfrei ist zu verstehen, dass der zumindest eine Profilträger eine Innenkontur des Tragarmdurchbruchs im Betrieb des Landfahrzeugs nicht berührt. Insbesondere kann jedoch bei einer starken Torsion des Zwischenrahmens, beispielsweise bei einer Geländefahrt, der zumindest eine Profilträger die Innenkontur des Tragarmdurchbruchs dennoch berühren, wodurch eine definierte Begrenzung der Torsion der Fahrgestellanordnung erreicht werden kann.

Gemäß einer weiteren Ausführungsform umfasst der Tragarm ein Tragarmprofil und zumindest ein mit dem Tragarmprofil verbundenes Abdeckblech.

Es können beispielsweise zwei oder mehr Abdeckbleche vorgesehen sein. Es kann alternativ auch genau ein Abdeckblech vorgesehen sein. Das Tragarmprofil ist im Querschnitt U-förmig und ist bezüglich der Hochrichtung der Fahrgestellanordnung nach unten geöffnet. Das Abdeckblech verschließt diese Öffnung des Tragarmprofils. Das Tragarmprofil ist beispielsweise ein Stahlprofil. Das Abdeckblech ist bevorzugt ein Stahlblech. Das Abdeckblech kann eine geknickte Geometrie aufweisen. Das Tragarmprofil kann ausgehend von einem Rand desselben hin zu dem Zentralrohr eine zunehmende Querschnittshöhe aufweisen. Hierdurch kann das Tragarmprofil mit Blickrichtung in der Längsrichtung eine dreieckförmige oder pfeilförmige Geometrie aufweisen.

Gemäß einer weiteren Ausführungsform verschließt das zumindest eine Abdeckblech den Tragarmdurchbruch in einer Hochrichtung der Fahrgestellanordnung derart, dass der Tragarmdurchbruch umfänglich vollständig vom Material des Tragarms umschlossen ist.

Der Tragarmdurchbruch ist insbesondere durch eine in dem Tragarmprofil vorgesehene Ausnehmung definiert, die mit Hilfe des Abdeckblechs zu einem umfänglich geschlossenen Durchbruch verschlossen ist.

Gemäß einer weiteren Ausführungsform ist das Tragarmprofil im Querschnitt U-förmig mit einem ersten Gurt, einem zweiten Gurt und einem den ersten Gurt mit dem zweiten Gurt verbindenden Steg ausgebildet, wobei das zumindest eine Abdeckblech den ersten Gurt mit dem zweiten Gurt verbindet und wobei der Tragarmdurchbruch sowohl den ersten Gurt als auch den zweiten Gurt durchbricht.

Der erste Gurt ist parallel zu dem zweiten Gurt angeordnet. Der Steg verbindet den ersten Gurt materialeinstückig mit dem zweiten Gurt. Das Abdeckblech kann mit dem ersten Gurt und mit dem zweiten Gurt fest verbunden sein.

Gemäß einer weiteren Ausführungsform ist an dem ersten Gurt und an dem zweiten Gurt jeweils eine Abkantung vorgesehen, die jeweils von dem Steg weg weist, wobei das zumindest eine Abdeckblech mit den Abkantungen verbunden, insbesondere verschraubt, ist.

Die Abkantungen sind bevorzugt jeweils parallel zu dem Steg angeordnet. Die Abkantungen weisen bezüglich des Stegs nach außen. Die Abkantungen können auch nach innen weisen. Alternativ kann auch eine Abkantung nach außen und die andere Abkantung kann nach innen weisen. Die Abkantungen sind im Bereich des Tragarmdurchbruchs bevorzugt unterbrochen. Durch das Schließen des ursprünglich U-förmigen, nach unten offenen Tragarmprofils kann dessen Steifigkeit im Vergleich zu einem offenen Profil wesentlich erhöht werden. Insbesondere wird ein Ausbeulen des Tragarmprofils im Bereich des Tragarmdurchbruchs wirksam verhindert. Hierdurch kann eine ausreichende Steifigkeit des Tragarms auch bei geringen Wandstärken des Tragarmprofils und des Abdeckblechs erzielt werden. Eine weitere Steigerung der Sicherheit gegen Beulen des Tragarmprofils kann durch das Einbringen von Sicken erfolgen. Die Verbindung des Tragarmprofils mit dem Abdeckblech erfolgt vorzugsweise über eine Schraubverbindung. Gegenüber einer Schweißverbindung ist dies vorteilhaft, da Schweißnähte bei Schwingungsbeanspruchung aufgrund von Einbrandkerben strukturelle Schwachstellen bilden.

Gemäß einer weiteren Ausführungsform umfasst der zumindest eine Profilträger einen Profilträgerdurchbruch, wobei der Tragarm derart durch den Profilträgerdurchbruch hindurchgeführt ist, dass ein Querschnitt des Tragarms zumindest abschnittsweise innerhalb des Profilträgerdurchbruchs angeordnet ist.

Hierdurch können der Tragarm und der zumindest eine Profilträger mit- und/oder ineinander verschachtelt werden. Der Profilträgerdurchbruch ist insbesondere ein Langloch, das sich in der Längsrichtung erstreckt. Der Querschnitt des Tragarms ist bevorzugt teilweise innerhalb des Profilträgerdurchbruchs und teilweise außerhalb des Profilträgerdurchbruchs angeordnet. Der Querschnitt des Tragarms ist dabei als eine Schnittfläche des Tragarmprofils und des Abdeckblechs senkrecht zu der Querrichtung definiert. Der Querschnitt kann auch als Querschnittsfläche des Tragarms bezeichnet werden.

Gemäß einer weiteren Ausführungsform ist das zumindest eine Abdeckblech durch den Profilträgerdurchbruch hindurchgeführt.

Das heißt, der Teil des Querschnitts des Tragarms, der innerhalb des Profilträgerdurchbruchs angeordnet ist, wird von dem Abdeckblech bereitgestellt.

Gemäß einer weiteren Ausführungsform ist der Tragarm berührungsfrei durch den Profilträgerdurchbruch hindurchgeführt.

Vorzugsweise kann im Geländebetrieb des Landfahrzeugs die Fahrgestellanordnung soweit tordiert werden, bis das Abdeckblech dennoch eine Innenkontur des Profilträgerdurchbruchs berührt. Insbesondere begrenzt das Abdeckblech die maximal mögliche Torsion der Fahrgestellanordnung derart, dass bei einer zu großen Torsion das Abdeckblech entweder an einer oberen Kante oder an einer unteren Kante des Profilträgerdurchbruchs des zumindest einen Profilträgers anstößt. In diesem Fall kann die Fahrgestellanordnung der durch die Geländeeinwirkung geforderten Torsion nicht mehr nachgeben, und es wird sich nach Erschöpfung des möglichen Federweges der Achse in der Konsequenz wenigstens ein Fahrzeugrad des Landfahrzeugs vom Untergrund abheben. Dies schützt den Zwischenrahmen vor allzu großer Torsion. Hierdurch ist eine Beschädigung der Fahrgestellanordnung beziehungsweise eine Kollision von Bauteilen ausgeschlossen.

Gemäß einer weiteren Ausführungsform ist der zumindest eine Profilträger derart durch den Tragarmdurchbruch hindurchgeführt, dass der Querschnitt des zumindest einen Profilträgers vollständig innerhalb des Tragarmdurchbruchs angeordnet ist.

Das heißt, eine Innenkontur des Tragarmdurchbruchs umläuft den zumindest einen Profilträger vollständig.

Gemäß einer weiteren Ausführungsform weist der zumindest eine Profilträger eine Querschnittsverengung auf, die durch den Tragarmdurchbruch hindurchgeführt ist.

Die Querschnittsverengung kann dadurch erzeugt werden, dass ein unterer Gurt des zumindest einen Profilträgers hin zu einem oberen Gurt desselben geführt wird.

Gemäß einer weiteren Ausführungsform ist zusätzlich zu dem zumindest einen Profilträger des Zwischenrahmens zumindest ein Profilträger des Fahrgestellrahmens durch den Tragarmdurchbruch hindurchgeführt, wobei der zumindest eine Profilträger des Fahrgestellrahmens derart durch den Tragarmdurchbruch hindurchgeführt ist, dass ein Querschnitt des zumindest einen Profilträgers des Fahrgestellrahmens zumindest abschnittsweise innerhalb des Tragarmdurchbruchs angeordnet ist.

Insbesondere ist ein Teil des Querschnitts des zumindest einen Profilträgers des Fahrgestellrahmens innerhalb des Tragarmdurchbruchs, und ein Teil des Querschnitts ist außerhalb des Tragarmdurchbruchs angeordnet. Hierdurch kann die Bauhöhe der Fahrgestellanordnung nochmals reduziert werden. Der Querschnitt des zumindest einen Profilträgers des Fahrgestellrahmens ist dabei als eine Schnittfläche des zumindest einen Profilträgers senkrecht zu der Längsrichtung definiert. Der Querschnitt kann auch als Querschnittsfläche des zumindest einen Profilträgers bezeichnet werden.

Gemäß einer weiteren Ausführungsform umfasst der zumindest eine Profilträgers des Fahrgestellrahmens einen Profilträgerdurchbruch, wobei der Tragarm derart durch den Profilträgerdurchbruch hindurchgeführt ist, dass ein Querschnitt des Tragarms zumindest abschnittsweise innerhalb des Profilträgerdurchbruchs angeordnet ist.

Insbesondere ist das Abdeckblech des Tragarms durch den Profilträgerdurchbruch hindurchgeführt. Insbesondere ist das Abdeckblech berührungsfrei durch den Profilträgerdurchbruch hindurchgeführt.

Gemäß einer weiteren Ausführungsform umfasst die Trageinrichtung ein in der Längsrichtung verlaufendes Zentralrohr, das fest mit dem Tragarm verbunden ist, wobei das Zentralrohr beweglich an dem Zwischenrahmen gelagert ist.

Das heißt, die Fahrgestellanordnung kann ein Zentralrohrrahmen sein. Alternativ kann die Fahrgestellanordnung, wie zuvor schon erwähnt, auch ein Leiterrahmen sein. Das Zentralrohr ist mit Hilfe von Lagereinrichtungen beweglich an dem Zwischenrahmen gelagert. Beispielsweise können drei derartige Lagereinrichtungen zur Bildung einer Dreipunktlagerung vorgesehen sein.

Weiterhin wird ein Landfahrzeug, insbesondere ein geländegängiger Lastkraftwagen, mit einer derartigen Fahrgestellanordnung vorgeschlagen.

Vorzugsweise weist das Landfahrzeug neben der Fahrgestellanordnung einen Aufbau auf, den die Trageinrichtung trägt. Der Aufbau kann beispielsweise eine Pritsche, einen Container, einen Koffer, einen Tank oder dergleichen umfassen. Es können unterschiedliche Aufbauten vorgesehen sein.

Die für die Fahrgestellanordnung beschriebenen Merkmale gelten auch für das Landfahrzeug und umgekehrt.

Weitere mögliche Implementierungen der Fahrgestellanordnung und/oder des Landfahrzeugs umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Fahrgestellanordnung und/oder des Landfahrzeugs hinzufügen.

Weitere vorteilhafte Ausgestaltungen und Aspekte der Fahrgestellanordnung und/oder des Landfahrzeugs sind Gegenstand der Unteransprüche sowie der im Folgenden beschriebenen Ausführungsbeispiele der Fahrgestellanordnung und/oder des Landfahrzeugs. Im Weiteren werden die Fahrgestellanordnung und/oder das Landfahrzeug anhand von bevorzugten Ausführungsformen unter Bezugnahme auf die beigelegten Figuren näher erläutert.
- Fig. 1: zeigt eine schematische Seitenansicht einer Ausführungsform eines Landfahrzeugs,
- Fig. 2: zeigt eine schematische Aufsicht des Landfahrzeugs gemäß Fig. 1;
- Fig. 3: zeigt eine schematische perspektivische Ansicht einer Ausführungsform einer Fahrgestellanordnung für das Landfahrzeug gemäß Fig. 1;
- Fig. 4: zeigt eine schematische Schnittansicht einer Ausführungsform eines Tragarms für die Fahrgestellanordnung gemäß Fig. 3;
- Fig. 5: zeigt eine schematische Schnittansicht einer Ausführungsform eines Profilträgers für die Fahrgestellanordnung gemäß Fig. 3;
- Fig. 6: zeigt eine schematische perspektivische Ansicht einer weiteren Ausführungsform einer Fahrgestellanordnung für das Landfahrzeug gemäß Fig. 1;
- Fig. 7: zeigt eine schematische perspektivische Ansicht einer weiteren Ausführungsform einer Fahrgestellanordnung für das Landfahrzeug gemäß Fig. 1;
- Fig. 8: zeigt eine schematische Schnittansicht einer Ausführungsform eines Profilträgers für die Fahrgestellanordnung gemäß Fig. 7; und
- Fig. 9: zeigt eine schematische perspektivische Ansicht einer weiteren Ausführungsform einer Fahrgestellanordnung für das Landfahrzeug gemäß Fig. 1.

In den Figuren sind gleiche oder funktionsgleiche Elemente mit denselben Bezugszeichen versehen worden, sofern nichts anderes angegeben ist.

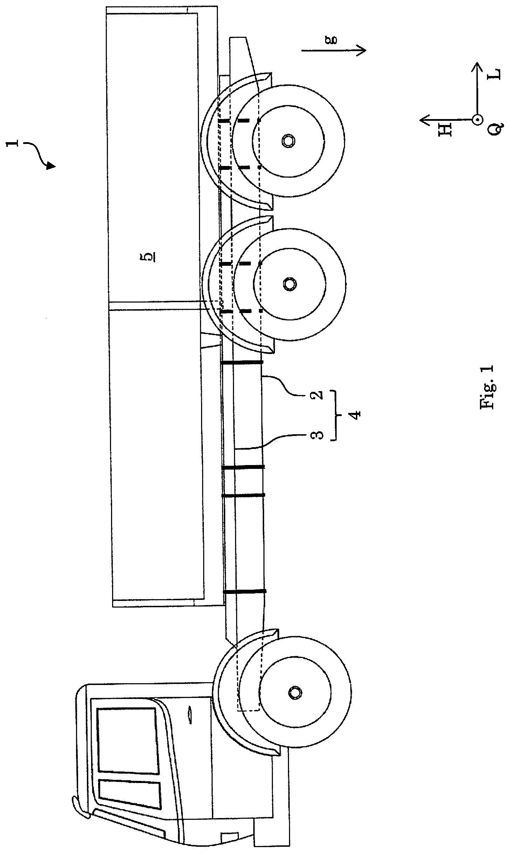

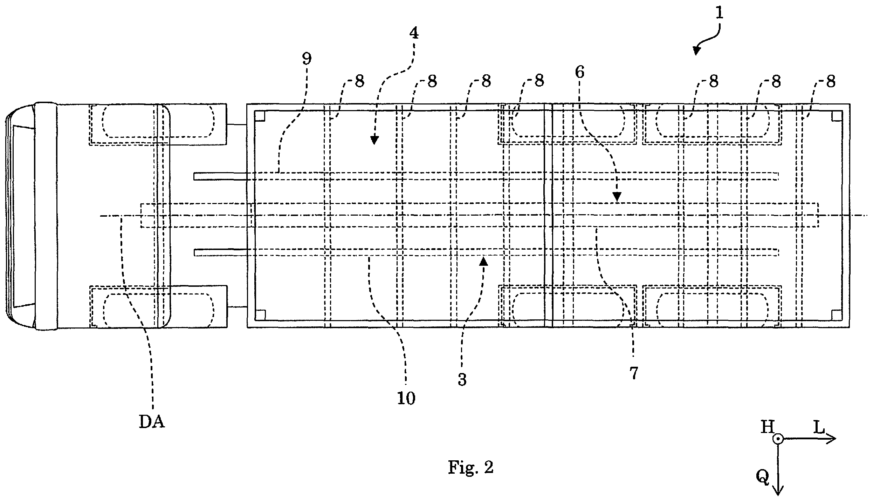

Die Fig. 1 zeigt eine schematische Seitenansicht einer Ausführungsform eines Landfahrzeugs 1. Die Fig. 2 zeigt eine schematische Aufsicht des Landfahrzeugs 1. Das Landfahrzeug 1 ist insbesondere ein geländegängiger Lastkraftwagen. Das Landfahrzeug 1 kann, wie in der Fig. 1 gezeigt, ein Dreiachser sein. Alternativ kann das Landfahrzeug 1 auch beliebig viele Achsen aufweisen. Das Landfahrzeug 1 umfasst einen biegesteifen und verwindungsweichen Fahrgestellrahmen 2. Der Fahrgestellrahmen 2 erstreckt sich von einem Motor des Landfahrzeugs 1 bis hin zu einem Fahrzeugheck und kann zwei in einer Längsrichtung L verlaufende Profilträger aufweisen.

Auf den Fahrgestellrahmen 2 ist ein Hilfsrahmen oder Zwischenrahmen 3 aufgelegt. Der Zwischenrahmen 3 kann beispielsweise mit dem Fahrgestellrahmen 2 verschraubt sein. Der Zwischenrahmen 3 ist analog zu dem Fahrgestellrahmen 2 verwindungsweich und biegesteif und kann sich gegenüber diesem begrenzt verschieben und/oder verwinden. Der Fahrgestellrahmen 2 und der Zwischenrahmen 3 sind Teil einer Fahrgestellanordnung 4 des Landfahrzeugs 1. Die Fahrgestellanordnung 4 ist dazu geeignet, einen verwindungssteifen Aufbau 5 des Landfahrzeugs 1 zu tragen. Der Aufbau 5 kann beispielsweise eine Pritsche, einen Container, einen Koffer, einen Tank oder dergleichen umfassen. Die Fahrgestellanordnung 4 weist die Längsrichtung L, eine senkrecht zu der Längsrichtung L orientierte Querrichtung Q und eine sowohl senkrecht zu der Längsrichtung L und der Querrichtung Q orientierte Hochrichtung H auf. Die Hochrichtung H ist dabei entgegengesetzt und parallel zu einer Schwerkraftrichtung g orientiert.

Die Fahrgestellanordnung 4 umfasst weiterhin eine in der Fig. 2 gezeigte Trageinrichtung 6 zum Tragen des Aufbaus 5. Die Trageinrichtung 6 umfasst ein in der Längsrichtung L verlaufendes Zentralrohr 7 und eine Vielzahl in der Querrichtung Q verlaufende Traversen oder Tragarme 8. Die Anzahl der Tragarme 8 ist beliebig. Die Trageinrichtung 6 dient als Bindeglied zwischen dem verwindungsweichen Zwischenrahmen 3 und dem verwindungssteifen Aufbau 5. Mit Hilfe der Trageinrichtung 6 kann bei einer Geländefahrt des Landfahrzeugs 1 eine Beschädigung des Aufbaus 5 aufgrund einer Verwindung der Fahrgestellanordnung 4 verhindert werden. Das Zentralrohr 7 ist über nicht dargestellte Lagereinrichtungen mit den Zwischenrahmen 3 axial fest und drehbar verbunden.

Die Tragarme 8 sind mit einer Unterseite des Aufbaus 5 fest verbunden, beispielsweise verschraubt. Das Zentralrohr 7 kann beispielsweise mit Hilfe einer Dreipunktlagerung mit dem Zwischenrahmen 3 beweglich verbunden sein. Beispielsweise kann sich in einem hinteren Bereich des Landfahrzeugs 1 ein hinteres Drehlager befinden, um das sich das Zentralrohr 7 um eine in der Fahrzeugmitte des Landfahrzeugs 1 befindliche Drehachse DA drehen kann. Dieses Drehlager kann in bezüglich der Längsrichtung L ein Festlager sein. Die Dreipunktlagerung des Zentralrohrs 7 kann weiterhin durch zwei seitliche Gleitlager ergänzt sein. Die Lagerung des Zentralrohrs 7 an dem Zwischenrahmen 3 kann auch mit beliebigen anderen Lagereinrichtungen erfolgen. Die Fahrgestellanordnung 4 kann auch als Zentralrohrrahmen bezeichnet werden. Die Fahrgestellanordnung 4 kann allerdings auch ein sogenannter Leiterrahmen sein.

Wie der Fig. 2 weiterhin zu entnehmen ist, umfasst der Zwischenrahmen 3 zwei in der Längsrichtung L verlaufende Profilträger 9, 10. Weiterhin umfasst auch der Fahrgestellrahmen 2, wie zuvor schon erwähnt, zwei derartige in Längsrichtung L verlaufende Profilträger, die allerdings in der Orientierung der Fig. 2 unter den Profilträgern 9, 10 des Zwischenrahmens 3 angeordnet und daher nicht sichtbar sind.

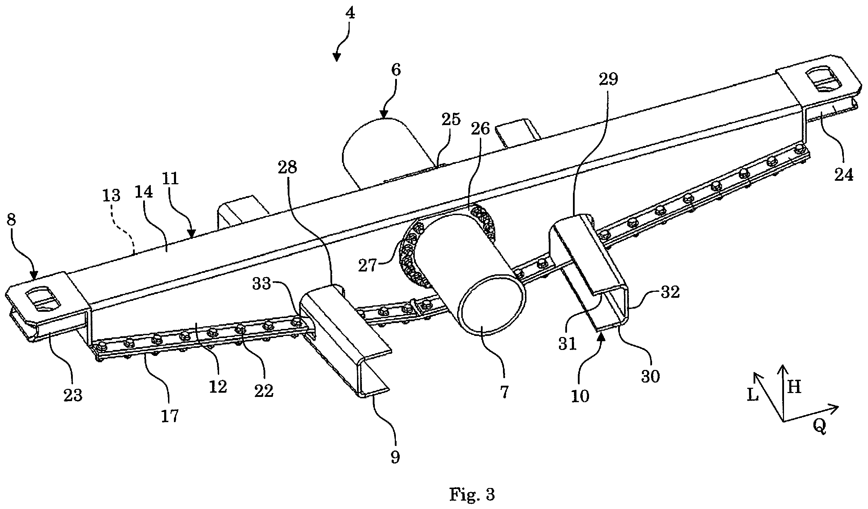

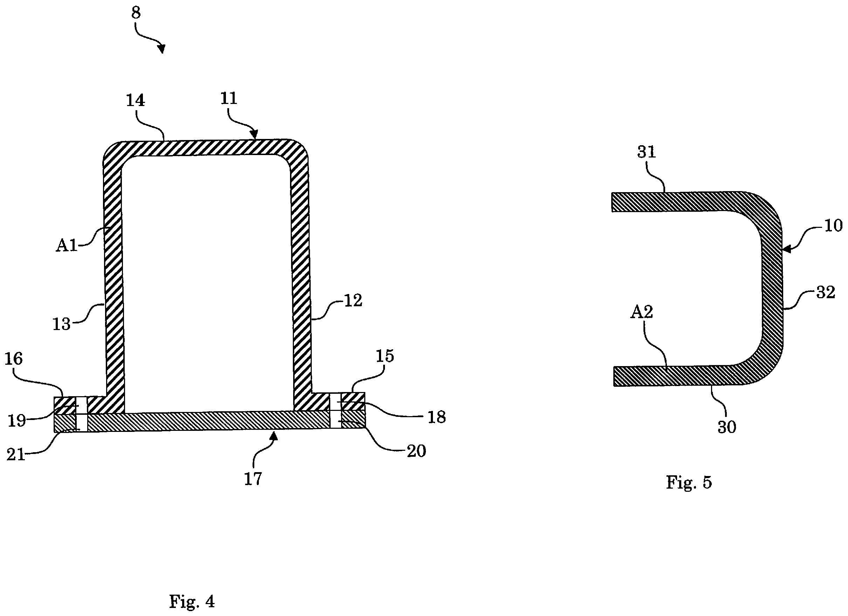

Die Fig. 3 zeigt eine schematische perspektivische Ansicht einer Ausführungsform einer Fahrgestellanordnung 4 für das Landfahrzeug gemäß den Fig. 1 und 2. In der Fig. 3 ist der Fahrgestellrahmen 2 nicht dargestellt. Die Fahrgestellanordnung 4 umfasst, wie schon zuvor erwähnt, neben dem Fahrgestellrahmen 2 die Trageinrichtung 6. Die Trageinrichtung 6 umfasst mehrere in der Querrichtung Q verlaufende Tragarme 8, von denen in der Fig. 3 jedoch nur einer gezeigt ist. Der Tragarm 8 ist vorzugsweise aus einem Stahlwerkstoff gefertigt. Der Tragarm 8 kann auch aus einem Titan- oder Aluminiumwerkstoff gefertigt sein. Weiterhin kann der Tragarm 8 auch aus einem glasfaserverstärkten Kunststoff (GFK) oder einem kohlenstofffaserverstärkten Kunststoff (KFK oder CFK) mit einlaminierten Beschlägen gefertigt sein. Der Tragarm 8 umfasst ein Tragarmprofil 11, das, wie in der Fig. 4 gezeigt ist, im Querschnitt U-förmig ist und in der Orientierung der Fig. 3 und 4 nach unten offen ist.

Das Tragarmprofil 11 umfasst einen ersten Gurt 12, einen dem ersten Gurt 12 gegenüberliegend und beabstandet von diesem angeordneten zweiten Gurt 13 und einen zwischen dem ersten Gurt 12 und dem zweiten Gurt 13 angeordneten und die Gurte 12, 13 miteinander verbindenden Steg 14. An dem ersten Gurt 12 ist eine erste Abkantung 15 vorgesehen, die von dem Steg 14 nach außen weg weist. An dem zweiten Gurt 13 ist eine zweite Abkantung 16 vorgesehen, die ebenfalls von dem Steg 14 nach außen hin weg weist. Die Abkantungen 15, 16 können oder eine der Abkantungen 15, 16 kann auch nach innen weisen.

Nach unten, das heißt von dem Steg 14 wegweisend, ist das Tragarmprofil 11 mit Hilfe eines dem Tragarm 8 zugeordneten Abdeckblechs 17 verschlossen. In den Abkantungen 15, 16 ist jeweils eine Vielzahl an Bohrungen 18, 19 vorgesehen, die zu in dem Abdeckblech 17 vorgesehenen Bohrungen 20, 21 korrespondieren. Durch die Bohrungen 18 bis 21 ist eine Vielzahl an Schrauben 22 hindurchgeführt, die das Abdeckblech 17 fest mit dem Tragarmprofil 11 verbinden. Alternativ kann das Abdeckblech 17 auch mit dem Tragarmprofil 11 verschweißt oder vernietet sein. Vorzugsweise ist das Abdeckblech 17 jedoch mit dem Tragarmprofil 11 verschraubt und damit lösbar verbunden.

Der Tragarm 8 weist beidseitig seitlich an dem Tragarmprofil 11 angeordnete Aufnahmeelemente 23, 24 auf, an denen der Aufbau 5 befestigt werden kann. Die Aufnahmeelemente 23, 24 können zur Aufnahme beispielsweise von Containern mit standardisierten Anschlussstücken ausgerüstet sein. Auch andere Ausgestaltungen von Endbereichen des Tragarms 8 sind möglich. Die Verbindung zwischen dem Tragarm 8 und den Aufnahmeelementen 23, 24 kann beispielsweise durch eine Schweißverbindung erfolgen, wobei allerdings auch eine Verschraubung oder Vernietung möglich ist.

Das Tragarmprofil 11 weist ausgehend von den Aufnahmeelementen 23, 24 hin in Richtung zu dem Zentralrohr 7 eine Querschnittserhöhung auf. Das heißt, jeweils ausgehend von den Aufnahmeelementen 23, 24 in Richtung zu dem Zentralrohr 7 hin vergrößert sich eine Höhe eines Querschnitts A1 des Tragarms 8 in der Hochrichtung H. Hierdurch erhält das Tragarmprofil 11 mit Blickrichtung in der Längsrichtung L eine dreieckförmige oder pfeilförmige Geometrie. Der Querschnitt A1 ist dabei als eine Schnittfläche des Tragarmprofils 11 und des Abdeckblechs 17 senkrecht zu der Querrichtung Q definiert. Der Querschnitt A1 kann auch als Querschnittsfläche des Tragarms 8 bezeichnet werden.

Das Zentralrohr 7 ist mit Hilfe von Flanschen 25, 26 fest mit dem Tragarmprofil 11 verbunden. Hierzu können die Flansche 25, 26 mit Hilfe einer Vielzahl an Schrauben 27 mit dem Tragarmprofil 11 verschraubt sein. Die Flansche 25, 26 können mit dem Zentralrohr 7 verschweißt sein. Das Zentralrohr 7 ist vorzugsweise ebenfalls aus einem Stahlwerkstoff gefertigt. Das Zentralrohr 7 kann auch aus einem Titan- oder Aluminiumwerkstoff oder aus GFK oder CFK gefertigt sein. Bei der Verwendung von GFK oder CFK kann vorteilhafterweise ein sehr geringes Gewicht erreicht werden.

Der Tragarm 8 umfasst zwei in der Querrichtung Q voneinander beabstandet angeordnete Tragarmdurchbrüche 28, 29, die das Tragarmprofil 11 durchbrechen. Insbesondere sind ein erster Tragarmdurchbruch 28 und ein zweiter Tragarmdurchbruch 29 vorgesehen. Die Tragarmdurchbrüche 28, 29 weisen eine U-förmige Geometrie auf. Die Tragarmdurchbrüche 28, 29 sind in der Hochrichtung H von dem Abdeckblech 17 derart verschlossen, dass die Tragarmdurchbrüche 28, 29 jeweils umfänglich vollständig von Material des Tragarms 8 umschlossen sind. Die Tragarmdurchbrüche 28, 29 sind sowohl durch den ersten Gurt 12 als auch durch den zweiten Gurt 13 des Tragarmprofils 11 hindurchgeführt. Die Abkantungen 15, 16 sind im Bereich der Tragarmdurchbrüche 28, 29 unterbrochen.

Die Profilträger 9, 10 sind im Querschnitt C-förmig und umfassen, wie in den Fig. 3 und 5 gezeigt, jeweils einen ersten Gurt 30, einen von dem ersten Gurt 30 beabstandet und parallel zu diesem angeordneten zweiten Gurt 31 und einen den ersten Gurt 30 mit dem zweiten Gurt 31 verbindenden Steg 32. Die Profilträger 9, 10 weisen jeweils einen Querschnitt A2 auf. Der Querschnitt A2 kann auch als Querschnittsfläche der Profilträger 9, 10 bezeichnet werden. Der Querschnitt A2 ist dabei als eine Schnittfläche des jeweiligen Profilträgers 9, 10 senkrecht zu der Längsrichtung L definiert. Die Profilträger 9, 10 können auch einen geschlossenen Querschnitt aufweisen.

Die Profilträger 9, 10 sind derart durch die Tragarmdurchbrüche 28, 29 hindurchgeführt, dass der jeweilige Querschnitt A2 der Profilträger 9, 10 zumindest abschnittsweise innerhalb des jeweiligen Tragarmdurchbruchs 28, 29 angeordnet ist. Wie in der Fig. 3 zu erkennen ist, ist der jeweilige Querschnitt A2 der Profilträger 9, 10 zum Teil innerhalb des ihm zugeordneten Tragarmdurchbruchs 28, 29 und zum Teil außerhalb des ihm zugeordneten Tragarmdurchbruchs 28, 29 angeordnet. Das heißt, die Profilträger 9, 10 sind nicht vollständig innerhalb des ihnen zugeordneten Tragarmdurchbruchs 28, 29 angeordnet.

Jeder Profilträger 9, 10 umfasst einen in der Längsrichtung L der Fahrgestellanordnung 4 verlaufenden Profilträgerdurchbruch 33. Durch den jeweiligen Profilträgerdurchbruch 33 der Profilträger 9, 10 ist der Tragarm 8 derart hindurchgeführt, dass der Querschnitt A1 des Tragarms 8 zumindest abschnittsweise innerhalb des jeweiligen Profilträgerdurchbruchs 33 angeordnet ist. Insbesondere ist das Abdeckblech 17 des Tragarms 8 durch den jeweiligen Profilträgerdurchbruch 33 der Profilträger 9, 10 hindurchgeführt. Das Abdeckblech 17 ist dabei so durch die Profilträgerdurchbrüche 33 hindurchgeführt, dass dieses den jeweiligen Profilträger 9, 10 nicht kontaktiert.

Zur Montage der Fahrgestellanordnung 4 wird zunächst der Zwischenrahmen 3 mit dem Fahrgestellrahmen 2 verbunden. Hierzu kann der Zwischenrahmen 3 beispielsweise mit dem Fahrgestellrahmen 2 verschraubt werden. Zuerst wird das Abdeckblech 17 aufgrund seiner gekanteten Form in die Profilträgerdurchbrüche 33 eingefädelt. Anschließend wird das Zentralrohr 7 zusammen mit den Flanschen 25, 26 und den Tragarmen 8, wie zuvor schon erwähnt, mit Hilfe von Lagereinrichtungen beweglich mit dem Zwischenrahmen 3 verbunden. Dabei umschließen die Tragarmdurchbrüche 28, 29 der Profilträger 9, 10 mit einem gewissen Abstand zu den Profilträgern 9, 10 zumindest teilweise die Profilträger 9, 10. Im Bereich dieser Umschließung weisen die Stege 32 der Profilträger 9, 10 jeweils den schon zuvor erwähnten Profilträgerdurchbruch 33 auf.

Eine Ausdehnung des jeweiligen Profilträgerdurchbruchs 33 in der Längsrichtung L und in der Hochrichtung H der Fahrgestellanordnung 4 ist dabei so groß gewählt, dass eine Breite der Abkantungen 15, 16 in der Längsrichtung L kleiner ist als eine Länge der Profilträgerdurchbrüche 33 in der Längsrichtung L. Eine Höhe der Profilträgerdurchbrüche 33 in der Hochrichtung H ist mindestens so groß gewählt, dass bei einer Verwindung oder Torsion der Fahrgestellanordnung 4 die Abkantungen 15, 16 nicht die Profilträgerdurchbrüche 33 kontaktieren.

Das Tragarmprofil 11 wird dann in der Orientierung der Fig. 3 unterseitig durch das Abdeckblech 17 verschlossen, dessen von einer ebenen Fläche abweichende geknickte Form einer unteren Kontur des Tragarmprofils 11 entspricht. Eine Breite des Abdeckblechs 17 in der Längsrichtung L ist so gewählt, dass sie der Breite der Abkantungen 15, 16 entspricht. Die in dem Abdeckblech 17 vorgesehenen Bohrungen 20, 21 fluchten mit den Bohrungen 18, 19 der Abkantungen 15, 16. In die Bohrungen 18 bis 21 werden die Schrauben 22 eingebracht und zur Verbindung des Abdeckblechs 17 mit dem Tragarmprofil 11 miteinander verschraubt. Zur Montage des Abdeckblechs 17 wird dieses entlang dem Tragarmprofil 11 durch die Profilträgerdurchbrüche 33 hindurchgeschoben und mit dem Tragarmprofil 11 verschraubt. Dabei können zwei oder mehrere derartige Abdeckbleche 17 vorgesehen sein, die entsprechend voneinander geteilt sind. Dies vereinfacht die Montage des Abdeckblechs 17.

Das Abdeckblech 17 kann dabei mehrere Funktionen erfüllen. Durch das Schließen des ursprünglich U-förmigen, nach unten offenen Tragarmprofils 11 wird die Steifigkeit des Tragarms 8 wesentlich erhöht. Insbesondere wird ein Ausbeulen des Tragarmprofils 11 im Bereich der Tragarmdurchbrüche 28, 29 wirksam verhindert. Hierdurch kann eine ausreichende Steifigkeit des Tragarms 8 auch bei geringen Wandstärken des Tragarmprofils 11 und des Abdeckblechs 17 erzielt werden. Des Weiteren begrenzt das Abdeckblech 17 die maximal mögliche Torsion der Fahrgestellanordnung 4 dahingehend, dass bei einer zu großen Torsion das Abdeckblech 17 entweder an einer oberen Kante oder an einer unteren Kante des jeweiligen Profilträgerdurchbruchs 33 der Profilträger 9, 10 anstößt. In diesem Fall kann die Fahrgestellanordnung 4 der durch die Geländeeinwirkung geforderten Torsion nicht mehr nachgeben, und es wird sich in der Konsequenz nach Erschöpfung des Federweges der Achsen wenigstens ein Fahrzeugrad des Landfahrzeugs 1 vom Untergrund abheben. Dies schützt den Zwischenrahmen 3 vor allzu großer Torsion.

Die Verbindung des Tragarmprofils 11 mit dem Abdeckblech 17 erfolgt vorzugsweise über eine Schraubverbindung mit Hilfe der Schrauben 22. Gegenüber einer Schweißverbindung ist dies vorteilhaft, da Schweißnähte bei Schwingungsbeanspruchung aufgrund von Einbrandkerben strukturelle Schwachstellen bilden. Aus diesem Grund sind in hochbelasteten Bereichen Schweißnähte zu vermeiden. Weiterhin lassen sich so schwer schweißbare, hochfeste Feinkorn-Stähle auswählen, die im Bereich der aufgeschmolzenen Zone um eine Schweißnaht ihre hohe Festigkeit aufgrund von Kornvergröberungen verlieren. Insbesondere können höherfeste Stähle, wie beispielsweise S500MC oder S700MC, eingesetzt werden. Hierdurch kann eine deutliche Gewichtsersparnis gegenüber der Verwendung anderer Stähle erreicht werden. Andererseits lassen sich bei unveränderter Wandstärke auch Stähle mit geringerer Qualität verwenden.

Zur weiteren Gewichtsersparnis können zusätzliche Öffnungen oder Durchbrüche vorgesehen werden, deren Position so gewählt wird, dass diese die Steifigkeit des Tragarms 8 nicht negativ beeinflussen. Weiterhin können die Tragarmdurchbrüche 28, 29 und/oder die Profilträgerdurchbrüche 33 verstärkt werden. Hierzu können beispielsweise Hülsen, Aufdoppelungen oder aufgeschraubte Lochbleche verwendet werden. Weiterhin ist es möglich, die Formgebung der Tragarmdurchbrüche 28, 29 und/oder der Profilträgerdurchbrüche 33 geometrisch zu variieren, um besonders belastete Bereiche, wie Kerben, zu vermeiden.

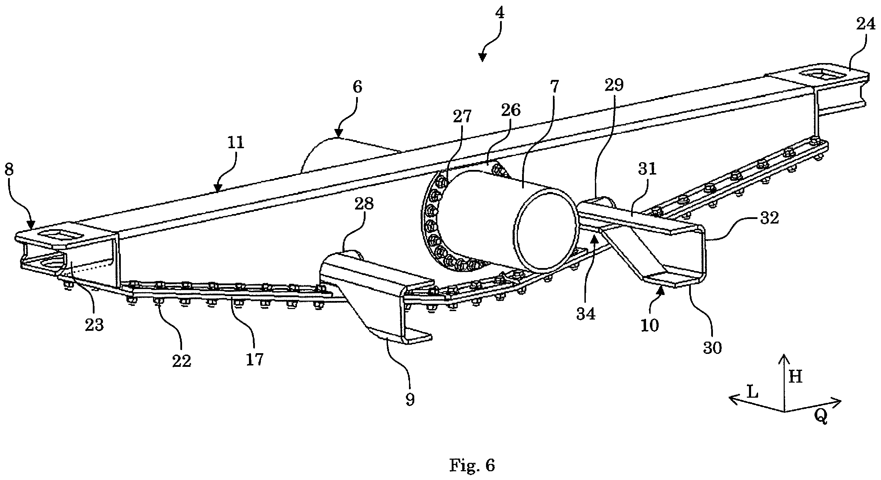

Die Fig. 6 zeigt eine schematische perspektivische Ansicht einer weiteren Ausführungsform einer Fahrgestellanordnung 4 für das Landfahrzeug 1 gemäß den Fig. 1 und 2. Die Fahrgestellanordnung 4 gemäß der Fig. 6 unterscheidet sich von der Fahrgestellanordnung 4 gemäß der Fig. 3 dadurch, dass die Profilträger 9, 10 derart durch die Tragarmdurchbrüche 28, 29 hindurchgeführt sind, dass der jeweilige Querschnitt A2 der Profilträger 9, 10 vollständig innerhalb des jeweiligen Tragarmdurchbruchs 28, 29 angeordnet ist. Hierzu weisen die Profilträger 9, 10 jeweils eine Querschnittsverengung 34 auf, die dadurch gebildet wird, dass der untere oder erste Gurt 30 hin zu dem oberen oder zweiten Gurt 31 geführt wird.

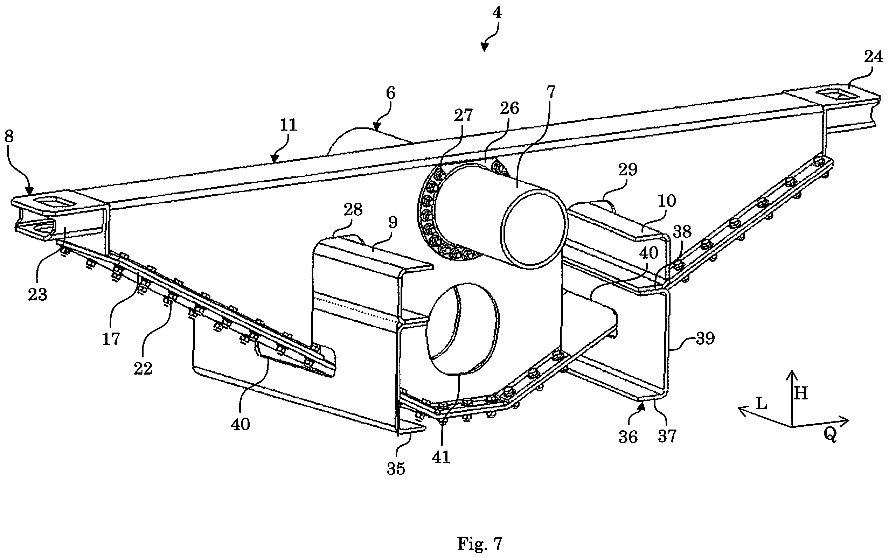

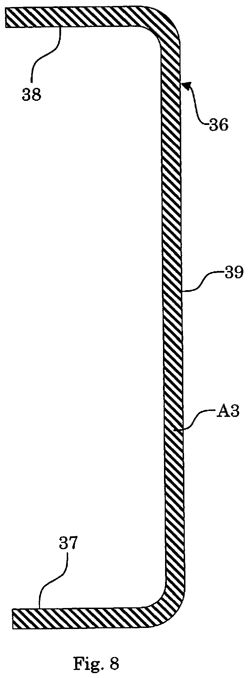

Die Fig. 7 zeigt eine schematische perspektivische Ansicht einer weiteren Ausführungsform einer Fahrgestellanordnung 4 für das Landfahrzeug 1 gemäß den Fig. 1 und 2. Die Fahrgestellanordnung 4 gemäß der Fig. 7 unterscheidet sich von der Fahrgestellanordnung 4 gemäß der Fig. 3 zum einen dadurch, dass die Profilträger 9, 10 des Zwischenrahmens 3 so durch die Tragarmdurchbrüche 28, 29 hindurchgeführt sind, dass der jeweilige Querschnitt A2 der Profilträger 9, 10 vollständig innerhalb des jeweiligen Tragarmdurchbruchs 28, 29 angeordnet ist. Zum anderen sind Profilträger 35, 36 des Fahrgestellrahmens 2, die ebenfalls wie die Profilträger 9, 10 des Zwischenrahmens 3 in der Längsrichtung L der Fahrgestellanordnung 4 verlaufen, derart durch den jeweiligen Tragarmdurchbruch 28, 29 hindurchgeführt, dass ein in der Fig. 8 gezeigter Querschnitt A3 des jeweiligen Profilträgers 35, 36 zumindest abschnittsweise innerhalb des jeweiligen Tragarmdurchbruchs 28, 29 angeordnet ist. Der Querschnitt A3 ist dabei als eine Schnittfläche des jeweilgen Profilträgers 35, 36 senkrecht zu der Längsrichtung L definiert.

Die Profilträger 35, 36 sind Stahlträger. Jeder Profilträger 35, 36 weist einen unteren oder ersten Gurt 37, einen beabstandet von dem ersten Gurt 37 und parallel zu diesem angeordneten oberen oder zweiten Gurt 38 und einen den ersten Gurt 37 mit dem zweiten Gurt 38 verbindenden Steg 39 auf. Auf dem zweiten Gurt 38 der Profilträger 35, 36 liegen jeweils die Profilträger 9, 10 des Zwischenrahmens 3 auf. Die Profilträger 35, 36 des Fahrgestellrahmens 2 weisen in der Hochrichtung H eine größere Höhe auf als die Profilträger 9, 10 des Zwischenrahmens 3. Die Profilträger 35, 36 des Fahrgestellrahmens 2 umfassen jeweils einen Profilträgerdurchbruch 40, durch den der Tragarm 8 derart hindurchgeführt ist, dass der Querschnitt A1 des Tragarms 8 zumindest abschnittsweise innerhalb des Profilträgerdurchbruchs 40 angeordnet ist.

Die Profilträgerdurchbrüche 40 sind jeweils in dem Steg 39 der Profilträger 35, 36 angeordnet. Insbesondere ist das Abdeckblech 17 durch die Profilträgerdurchbrüche 40 durchgeführt, so dass ein Teil des Querschnitts A3 des jeweiligen Profilträgers 35, 36 innerhalb des Tragarmdurchbruchs 28, 29 und ein Teil des Querschnitts A3 außerhalb des jeweiligen Tragarmdurchbruchs 28, 29 angeordnet ist. Weiterhin kann in dem Tragarmprofil 11 noch ein Durchbruch 41, beispielsweise zur Gewichtsersparnis oder zur Durchführung einer Antriebswelle, vorgesehen sein.

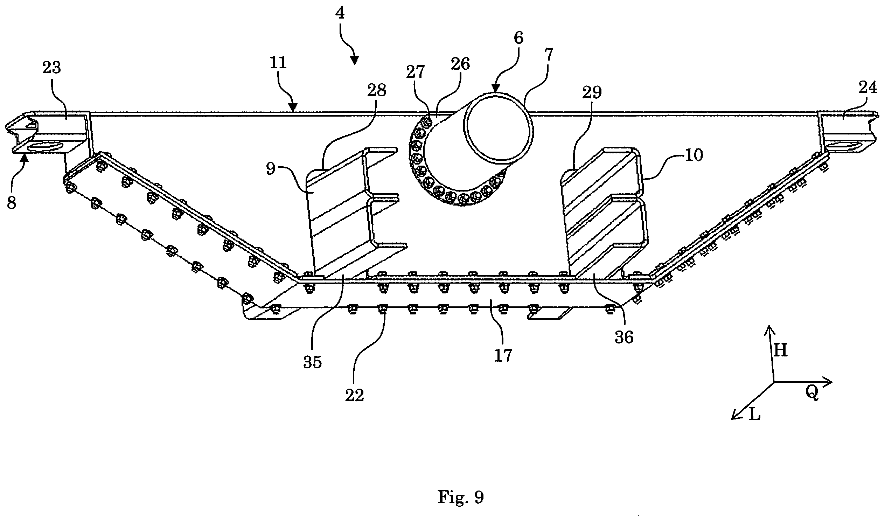

Die Fig. 9 zeigt eine schematische perspektivische Ansicht einer weiteren Ausführungsform einer Fahrgestellanordnung 4 für das Landfahrzeug 1 gemäß den Fig. 1 und 2. Die Fahrgestellanordnung 4 gemäß der Fig. 9 unterscheidet sich von der Fahrgestellanordnung 4 gemäß der Fig. 7 dadurch, dass auch die Profilträger 35, 36 des Fahrgestellrahmens 2 derart durch die Tragarmdurchbrüche 28, 29 des Tragarms 8 hindurchgeführt sind, dass der jeweilige Querschnitt A3 der Profilträger 35, 36 vollständig innerhalb der Tragarmdurchbrüche 28, 29 angeordnet ist. Weiterhin weisen die Profilträger 9, 10 des Zwischenrahmens 3 und die Profilträger 35, 36 des Fahrgestellrahmens 2 in der Hochrichtung H jeweils identische Höhen auf.

Obwohl die vorliegende Erfindung anhand von Ausführungsbeispielen beschrieben wurde, ist sie vielfältig modifizierbar.

### BEZUGSZEICHENLISTE

- 1: Landfahrzeug
- 2: Fahrgestellrahmen
- 3: Zwischenrahmen
- 4: Fahrgestellanordnung
- 5: Aufbau
- 6: Trageinrichtung
- 7: Zentralrohr
- 8: Tragarm
- 9: Profilträger
- 10: Profilträger
- 11: Tragarmprofil
- 12: Gurt
- 13: Gurt
- 14: Steg
- 15: Abkantung
- 16: Abkantung
- 17: Abdeckblech
- 18: Bohrung
- 19: Bohrung
- 20: Bohrung
- 21: Bohrung
- 22: Schraube
- 23: Aufnahmeelement
- 24: Aufnahmeelement
- 25: Flansch
- 26: Flansch
- 27: Schraube
- 28: Tragarmdurchbruch
- 29: Tragarmdurchbruch
- 30: Gurt
- 31: Gurt
- 32: Steg
- 33: Profilträgerdurchbruch
- 34: Querschnittsverengung
- 35: Profilträger
- 36: Profilträger
- 37: Gurt
- 38: Gurt
- 39: Steg
- 40: Profilträgerdurchbruch
- 41: Durchbruch

- A1: Querschnitt
- A2: Querschnitt
- A3: Querschnitt
- DA: Drehachse
- g: Schwerkraftrichtung
- H: Hochrichtung
- L: Längsrichtung
- Q: Querrichtung

## Patentansprüche

1. Fahrgestellanordnung (4) für ein Landfahrzeug (1), insbesondere für einen geländegängigen Lastkraftwagen, mit:
einem Fahrgestellrahmen (2),
einem mit dem Fahrgestellrahmen (2) verbundenen Zwischenrahmen (3), der zumindest einen Profilträger (9, 10) umfasst, der in einer Längsrichtung (L) der Fahrgestellanordnung (4) verläuft, und
einer Trageinrichtung (6) zum Tragen eines Aufbaus (5) des Landfahrzeugs (1), wobei die Trageinrichtung (6) beweglich an dem Zwischenrahmen (3) gelagert ist und einen in einer Querrichtung (Q) der Fahrgestellanordnung (4) verlaufenden Tragarm (8) mit einem Tragarmdurchbruch (28, 29) umfasst, wobei der zumindest eine Profilträger (9, 10) derart durch den Tragarmdurchbruch (28, 29) hindurchgeführt ist, dass ein Querschnitt (A2) des zumindest einen Profilträgers (9, 10) zumindest abschnittsweise innerhalb des Tragarmdurchbruchs (28, 29) angeordnet ist.

2. Fahrgestellanordnung nach Anspruch 1,
**dadurch gekennzeichnet,**
**dass** der zumindest eine Profilträger (9, 10) berührungsfrei durch den Tragarmdurchbruch (28, 29) hindurchgeführt ist.

3. Fahrgestellanordnung nach Anspruch 1 oder 2,
**dadurch gekennzeichnet,**
**dass** der Tragarm (8) ein Tragarmprofil (11) und zumindest ein mit dem Tragarmprofil (11) verbundenes Abdeckblech (17) umfasst.

4. Fahrgestellanordnung nach Anspruch 3,
**dadurch gekennzeichnet,**
**dass** das zumindest eine Abdeckblech (17) den Tragarmdurchbruch (28, 29) in einer Hochrichtung (H) der Fahrgestellanordnung (4) derart verschließt, dass der Tragarmdurchbruch (28, 29) umfänglich vollständig von Material des Tragarms (8) umschlossen ist.

5. Fahrgestellanordnung nach Anspruch 3 oder 4,
**dadurch gekennzeichnet,**
**dass** das Tragarmprofil (11) im Querschnitt (A1) U-förmig mit einem ersten Gurt (12), einem zweiten Gurt (13) und einem den ersten Gurt (12) mit dem zweiten Gurt (13) verbindenden Steg (14) ausgebildet ist, wobei das zumindest eine Abdeckblech (17) den ersten Gurt (12) mit dem zweiten Gurt (13) verbindet und wobei der Tragarmdurchbruch (28, 29) sowohl den ersten Gurt (12) als auch den zweiten Gurt (13) durchbricht.

6. Fahrgestellanordnung nach Anspruch 5,
**dadurch gekennzeichnet,**
**dass** an dem ersten Gurt (12) und an dem zweiten Gurt (13) jeweils eine Abkantung (15, 16) vorgesehen ist, die jeweils von dem Steg (14) weg weist, wobei das zumindest eine Abdeckblech (17) mit den Abkantungen (15, 16) verbunden, insbesondere verschraubt, ist.

7. Fahrgestellanordnung nach einem der Ansprüche 3 - 6,
**dadurch gekennzeichnet,**
**dass** der zumindest eine Profilträger (9, 10) einen Profilträgerdurchbruch (33) umfasst, wobei der Tragarm (8) derart durch den Profilträgerdurchbruch (33) hindurchgeführt ist, dass ein Querschnitt (A1) des Tragarms (8) zumindest abschnittsweise innerhalb des Profilträgerdurchbruchs (33) angeordnet ist.

8. Fahrgestellanordnung nach Anspruch 7,
**dadurch gekennzeichnet,**
**dass** das zumindest eine Abdeckblech (17) durch den Profilträgerdurchbruch (33) hindurchgeführt ist.

9. Fahrgestellanordnung nach Anspruch 7 oder 8,
**dadurch gekennzeichnet,**
**dass** der Tragarm (8) berührungsfrei durch den Profilträgerdurchbruch (33) hindurchgeführt ist.

10. Fahrgestellanordnung nach einem der Ansprüche 1 - 6,
**dadurch gekennzeichnet,**
**dass** der zumindest eine Profilträger (9, 10) derart durch den Tragarmdurchbruch (28, 29) hindurchgeführt ist, dass der Querschnitt (A2) des zumindest einen Profilträgers (9, 10) vollständig innerhalb des Tragarmdurchbruchs (28, 29) angeordnet ist.

11. Fahrgestellanordnung nach Anspruch 10,
**dadurch gekennzeichnet,**
**dass** der zumindest eine Profilträger (9, 10) eine Querschnittsverengung (34) aufweist, die durch den Tragarmdurchbruch (28, 29) hindurchgeführt ist.

12. Fahrgestellanordnung nach Anspruch 10 oder 11,
**dadurch gekennzeichnet,**
**dass** zusätzlich zu dem zumindest einen Profilträger (9, 10) des Zwischenrahmens (3) zumindest ein Profilträger (35, 36) des Fahrgestellrahmens (2) durch den Tragarmdurchbruch (28, 29) hindurchgeführt ist, wobei der zumindest eine Profilträger (35, 36) des Fahrgestellrahmens (2) derart durch den Tragarmdurchbruch (28, 29) hindurchgeführt ist, dass ein Querschnitt (A3) des zumindest einen Profilträgers (35, 36) des Fahrgestellrahmens (2) zumindest abschnittsweise innerhalb des Tragarmdurchbruchs (28, 29) angeordnet ist.

13. Fahrgestellanordnung nach Anspruch 12,
**dadurch gekennzeichnet,**
**dass** der zumindest eine Profilträger (35, 36) des Fahrgestellrahmens (2) einen Profilträgerdurchbruch (40) umfasst, wobei der Tragarm (8) derart durch den Profilträgerdurchbruch (40) hindurchgeführt ist, dass ein Querschnitt (A1) des Tragarms (8) zumindest abschnittsweise innerhalb des Profilträgerdurchbruchs (40) angeordnet ist.

14. Fahrgestellanordnung nach einem der Ansprüche 1 - 13,
**dadurch gekennzeichnet,**
**dass** die Trageinrichtung (6) ein in der Längsrichtung (L) verlaufendes Zentralrohr (7) umfasst, das fest mit dem Tragarm (8) verbunden ist, wobei das Zentralrohr (7) beweglich an dem Zwischenrahmen (3) gelagert ist.

15. Landfahrzeug (1), insbesondere geländegängiger Lastkraftwagen, mit einer Fahrgestellanordnung (4) nach einem der Ansprüche 1 - 14.

## Claims

1. A chassis assembly (4) for a land vehicle (1), in particular for an off-road truck, comprising:
a chassis frame (2),
an intermediate frame (3) which is connected to the chassis frame (2) and which comprises at least one profiled support (9, 10) which runs in a longitudinal direction (L) of the chassis assembly (4), and
a support installation (6) for supporting a superstructure (5) of the land vehicle (1), wherein the support installation (6) is mounted so as to be movable on the intermediate frame (3) and comprises a support arm (8) having a support arm through-hole (28, 29), said support arm (8) running in a transverse direction (Q) of the chassis assembly (4), wherein the at least one profiled support (9, 10) is routed through the support arm through-hole (28, 29) in such a manner that a cross section (A2) of the at least one profiled support (9, 10) is at least in portions disposed within the support arm through-hole (28, 29).

2. The chassis assembly as claimed in claim 1,
**characterized in that**
the at least one profiled support (9, 10) is routed through the support arm through-hole (28, 29) in a non-contacting manner.

3. The chassis assembly as claimed in claim 1 or 2,
**characterized in that**
the support arm (8) comprises a support arm profile (11) and at least one cover panel (17) that is connected to the support arm profile (11).

4. The chassis assembly as claimed in claim 3,
**characterized in that**
the at least one cover panel (17) in a height direction (H) of the chassis assembly (4) closes the support arm through-hole (28, 29) in such a manner that the support arm through-hole (29, 29) is circumferentially completely enclosed by the material of the support arm (8).

5. The chassis assembly as claimed in claim 3 or 4,
**characterized in that**
the support arm profile (11) in the cross section (A1) is configured so as to be U-shaped having a first band (12), a second band (13), and a web (14) that connects the first band (12) to the second band (13), wherein the at least one cover panel (17) connects the first band (12) to the second band (13), and wherein the support arm through-hole (28, 29) penetrates both the first band (12) as well as the second band (13).

6. The chassis assembly as claimed in claim 5,
**characterized in that**
a folded edge (15, 16) is in each case provided on the first band (12) and on the second band (13), said folded edge (15, 16) pointing in each case away from the web (15), wherein the at least one cover panel (17) is connected, in particular screw-fitted, to the folded edges (15, 16).

7. The chassis assembly as claimed in one of claims 3 to 6,
**characterized in that**
the at least one profiled support (9, 10) comprises a profiled support through-hole (33), wherein the support arm (8) is routed through the profiled support through-hole (33) in such a manner that a cross section (A1) of the support arm (8) is at least in portions disposed within the profiled support through-hole (33).

8. The chassis assembly as claimed in claim 7,
**characterized in that**
the at least one cover panel (17) is routed through the profiled support through-hole (33).

9. The chassis assembly as claimed in claim 7 or 8,
**characterized in that**
the support arm (8) is routed through the profiled support through-hole (33) in a non-contacting manner.

10. The chassis assembly as claimed in one of claims 1 to 6,
**characterized in that**
the at least one profiled support (9, 10) is routed through the support arm through-hole (28, 29) in such a manner that the cross section (A2) of the at least one profiled support (9, 10) is completely disposed within the support arm through-hole (28, 29).

11. The chassis assembly as claimed in claim 10,
**characterized in that**
the at least one profiled support (9, 10) has a cross-sectional constriction (34) which is routed through the support arm through-hole (28, 29).

12. The chassis assembly as claimed in claim 10 or 11,
**characterized in that**
additionally to the at least one profiled support (9, 10) of the intermediate frame (3) at least one profiled support (35, 36) of the chassis frame (2) is routed through the support arm through-hole (28, 29), wherein the at least one profiled support (35, 36) of the chassis frame (2) is routed through the support arm through-hole (28, 29) in such a manner that a cross section (A3) of the at least one profiled support (35, 36) of the chassis frame (2) is at least in portions disposed within the support arm through-hole (28, 29).

13. The chassis assembly as claimed in claim 12,
**characterized in that**
the at least one profiled support (35, 36) of the chassis frame (2) comprises a profiled support through-hole (40), wherein the support arm (8) is routed through the profiled support through-hole (40) in such a manner that a cross section (A1) of the support arm (8) is at least in portions disposed within the profiled support through-hole (40).

14. The chassis assembly as claimed in one of claims 1 to 13,
**characterized in that**
the support installation (6) comprises a central tube (7) which runs in the longitudinal direction (L) and which is fixedly connected to the support arm (8), wherein the central tube (7) is mounted so as to be movable on the intermediate frame (3).

15. A land vehicle (1), in particular an off-road truck, having a chassis assembly (4) as claimed in one of claims 1 to 14.

## Revendications

1. Ensemble châssis (4) destiné à un véhicule terrestre (1), en particulier à un camion hors-route, comprenant :
un cadre de châssis (2),
un cadre intermédiaire (3) qui est relié au cadre de châssis (2) et qui comprend au moins un support profilé (9, 10) qui s'étend dans une direction longitudinale (L) de l'ensemble châssis (4), et
une installation de support (6) destinée à supporter une superstructure (5) du véhicule terrestre (1), dans lequel l'installation de support (6) est montée de façon à être mobile sur le cadre intermédiaire (3) et comprend un bras de support (8) comportant un trou traversant (28, 29) de bras de support, ledit bras de support (8) s'étendant dans une direction transversale (Q) de l'ensemble châssis (4), dans lequel l'au moins un support profilé (9, 10) traverse le trou traversant (28, 29) de bras de support d'une manière telle qu'une section transversale (A2) de l'au moins un support profilé (9, 10) est au moins en partie disposée à l'intérieur du trou traversant (28, 29) de bras de support.

2. Ensemble châssis selon la revendication 1,
**caractérisé en ce que**
l'au moins un support profilé (9, 10) traverse le trou traversant (28, 29) de bras de support d'une manière sans contact.

3. Ensemble châssis selon la revendication 1 ou la revendication 2,
**caractérisé en ce que**
le bras de support (8) comprend un profil (11) de bras de support et au moins un panneau de recouvrement (17) qui est relié au profil (11) de bras de support.

4. Ensemble châssis selon la revendication 3,
**caractérisé en ce que**
l'au moins un panneau de recouvrement (17), dans une direction de hauteur (H) de l'ensemble châssis (4), ferme le trou traversant (28, 29) de bras de support d'une manière telle que le trou traversant (28, 29) de bras de support est complètement enfermé circonférentiellement par le matériau du bras de support (8).

5. Ensemble châssis selon la revendication 3 ou la revendication 4,
**caractérisé en ce que**
le profil (11) de bras de support, dans la section transversale (A1), est conçu de façon à avoir une forme de U comportant une première bande (12), une seconde bande (13), et une paroi (14) qui relie la première bande (12) à la seconde bande (13), dans lequel l'au moins un panneau de recouvrement (17) relie la première bande (12) à la seconde bande (13), et dans lequel le trou traversant (28, 29) de bras de support pénètre à la fois la première bande (12) et la seconde bande (13).

6. Ensemble châssis selon la revendication 5,
**caractérisé en ce que**
un bord plié (15, 16) est, dans chaque cas, disposé sur la première bande (12) et sur la seconde bande (13), ledit bord plié (15, 16) étant, dans chaque cas, orienté à l'opposé de la paroi (14), dans lequel l'au moins un panneau de recouvrement (17) est relié, en particulier assemblé par vis, aux bords pliés (15, 16).

7. Ensemble châssis selon l'une des revendications 3 à 6,
**caractérisé en ce que**
l'au moins un support profilé (9, 10) comprend un trou traversant (33) de support profilé, dans lequel le bras de support (8) traverse le trou traversant (33) de support profilé d'une manière telle qu'une section transversale (A1) du bras de support (8) est au moins en partie disposée à l'intérieur du trou traversant (33) de support profilé.

8. Ensemble châssis selon la revendication 7,
**caractérisé en ce que**
l'au moins un panneau de recouvrement (17) traverse le trou traversant (33) de support profilé.

9. Ensemble châssis selon la revendication 7 ou la revendication 8,
**caractérisé en ce que**
le bras de support (8) traverse le trou traversant (33) de support profilé d'une manière sans contact.

10. Ensemble châssis selon l'une des revendications 1 à 6,
**caractérisé en ce que**
l'au moins un support profilé (9, 10) traverse le trou traversant (28, 29) de bras de support d'une manière telle que la section transversale (A2) de l'au moins un support profilé (9, 10) est complètement disposée à l'intérieur du trou traversant (28, 29) de bras de support.

11. Ensemble châssis selon la revendication 10,
**caractérisé en ce que**
l'au moins un support profilé (9, 10) comporte un resserrement de section transversale (34) qui traverse le trou traversant (28, 29) de bras de support.

12. Ensemble châssis selon la revendication 10 ou la revendication 11,
**caractérisé en ce que**
en plus de l'au moins un support profilé (9, 10) du cadre intermédiaire (3), au moins un support profilé (35, 36) du cadre de châssis (2) traverse le trou traversant (28, 29) de bras de support, dans lequel l'au moins un support profilé (35, 36) du cadre de châssis (2) traverse le trou traversant (28, 29) de bras de support d'une manière telle qu'une section transversale (A3) de l'au moins un support profilé (35, 36) du cadre de châssis (2) est au moins en partie disposée à l'intérieur du trou traversant (28, 29) de bras de support.

13. Ensemble châssis selon la revendication 12,
**caractérisé en ce que**
l'au moins un support profilé (35, 36) du cadre de châssis (2) comprend un trou traversant (40) de support profilé, dans lequel le bras de support (8) traverse le trou traversant (40) de support profilé d'une manière telle qu'une section transversale (A1) du bras de support (8) est au moins en partie disposée à l'intérieur du trou traversant (40) de support profilé.

14. Ensemble châssis selon l'une des revendications 1 à 13,
**caractérisé en ce que**
l'installation de support (6) comprend un tube central (7) qui s'étend dans la direction longitudinale (L) et qui est relié à demeure au bras de support (8), dans lequel le tube central (7) est monté de façon à être mobile sur le cadre intermédiaire (3).

15. Véhicule terrestre (1), en particulier camion hors-route, comportant un ensemble châssis (4) selon l'une des revendications 1 à 14.
